(19) Europäisches Patentamt
European Patent Office
Office européen des brevets

(11) **EP 2 021 189 B1**

(12) **FASCICULE DE BREVET EUROPEEN**

(45) Date de publication et mention
de la délivrance du brevet:
**05.03.2014 Bulletin 2014/10**

(21) Numéro de dépôt: **07731415.1**

(22) Date de dépôt: **04.05.2007**

(51) Int Cl.:
**B60B 1/00** *(2006.01)*    **B60B 1/04** *(2006.01)*
**B60B 21/06** *(2006.01)*

(86) Numéro de dépôt international:
**PCT/FR2007/000770**

(87) Numéro de publication internationale:
**WO 2007/135260 (29.11.2007 Gazette 2007/48)**

(54) **ROUE A RAYONS**

SPEICHENRAD

SPOKE WHEEL

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **12.05.2006 FR 0604237**

(43) Date de publication de la demande:
**11.02.2009 Bulletin 2009/07**

(60) Demande divisionnaire:
**10003199.6 / 2 193 930**
**11000812.5 / 2 311 649**

(73) Titulaire: **MAVIC S.A.S.
74370 Metz-Tessy (FR)**

(72) Inventeurs:
• **MERCAT, Jean-Pierre
74650 Chavanod (FR)**
• **MOUZIN, Olivier
74210 Montmin (FR)**

(74) Mandataire: **Lang, Johannes
Bardehle Pagenberg Partnerschaft mbB
Patentanwälte, Rechtsanwälte
Prinzregentenplatz 7
81675 München (DE)**

(56) Documents cités:
**DE-A1- 3 225 565         DE-U1- 20 313 846
US-A- 2 439 926          US-A- 2 994 560
US-A1- 2003 107 260      US-A1- 2004 195 908
US-A1- 2005 023 884      US-B1- 6 367 883**

EP 2 021 189 B1

## Description

L'invention concerne un nouveau concept de roue à bâtons, notamment pour une roue de cycle. L'invention concerne également une roue à bâton ayant au moins un tel bâton, ainsi qu'un engin de roulage, notamment un cycle, équipé d'au moins une telle roue.

La roue existe depuis la nuit des temps. Les premières roues étaient pleines. Une première amélioration a consisté à construire des roues à bâtons qui étaient plus légères. Ces bâtons étaient sollicités en compression et flexion par une jante. Puis la roue a été cerclée par un anneau métallique et les bâtons ont été précontraints en compression. La demande de brevet CH 91759 décrit un tel mode de construction.

L'invention de la roue à rayons à fils en tension remonte vers l'année 1866, elle est attribuée à Eugène Meyer. Cette invention a permis de construire des roues en diminuant considérablement la section des rayons, d'où un gain de poids très important. Egalement il est devenu possible d'augmenter le diamètre des roues, et donc d'augmenter leur développement comme cela a été le cas avec les grands bis en acier dont le pédalier était en prise directe sur la roue motrice. Par la suite les termes rayons en traction / en tension seront utilisés indifféremment pour une tension positive des rayons.

De façon classique une roue à rayons actuelle comprend une jante périphérique qui est prévue pour recevoir un pneumatique, un moyeu central et des rayons de liaison entre la jante et le moyeu. Le nombre des rayons est variable selon le type de roues, il varie généralement entre douze et quarante. En règle générale les rayons sont répartis selon deux nappes qui relient la jante à une extrémité du moyeu. Les rayons de chacune des nappes forment un angle avec le plan médian de la jante qu'on a coutume d'appeler l'angle de parapluie.

Les rayons relient structurellement la jante et le moyeu, ce qui permet de donner à la roue une bonne rigidité et une bonne résistance aux efforts. Les charges externes auxquelles une roue est soumise lors de son utilisation peuvent être décomposées en un effort radial dirigé selon le plan médian de la jante, un effort latéral dirigé perpendiculairement à ce plan, un effort moteur ou inversement un effort de freinage tangent au cercle de la roue qui correspond à la transmission d'un couple entre le moyeu et la jante.

Il existe actuellement d'autres constructions de roues que les roues à rayons en tension. On connaît par exemple les roues pleines ou des roues dites à bâtons qui sont réalisées en matériau composite et qui sont utilisées principalement pour leurs propriétés aérodynamiques. Les demandes de brevet WO 2004/033231 et FR 2701899 décrivent de telles roues. Il existe aussi des roues moulées réalisées en alliage léger (aluminium, magnésium ou titane). De telles roues sont par exemple connues des demandes de brevet EP 1016552 et WO 2004/108515.

Dans le cas des roues dites à bâtons en matériau composite, ou alliage moulé, les bâtons sont en nombre réduit de l'ordre de trois à cinq rayons bâtons par roue. En effet ces rayons qui doivent résister à des efforts de compression ont des sections beaucoup plus importantes que les rayons communs usuels pour éviter le flambage, et leurs dimensions elles-mêmes empêchent toute prévision de nombre plus important de bâtons.

Toutefois parmi ces différents modes de construction d'une roue, c'est encore la roue à rayons en tension qui est considérée comme donnant le meilleur compromis entre la légèreté et la résistance pourvu qu'elle soit bien construite et bien ajustée.

Or les roues à rayons en tension si elles donnent de bons résultats, présentent malgré tous quelques inconvénients.

En premier lieu la tension des rayons induit des contraintes de compression dans le corps de la jante. On estime que pour une roue de vélo de route à 36 rayons, chacun des rayons étant tendu à 1000 Newtons, l'effort de compression résultant au niveau du corps de la jante est de 5730 Newtons, ce qui induit une contrainte de compression de 88 MPa, qui représente pour un matériau usuel de jante (alu 6106 par exemple) déjà 40% du potentiel de résistance intrinsèque de matériau (220 MPa). Autrement dit cette compression induite affaiblit déjà considérablement la jante.

Par ailleurs, pour une jante de 622 mm de diamètre, cet effort de compression conduit à une réduction de la développée de la jante pouvant atteindre 2,5mm, ce qui, naturellement peut avoir une incidence sur la liaison entre la jante et le pneu et peut conduire à des déjantages intempestifs et des accidents.

En second lieu, la tension des rayons s'exerce de façon locale sur la jante. Chaque rayon induit par sa tension un effort de cisaillement local au niveau de sa zone d'accrochage ainsi qu'un moment de flexion variable entre chaque trou de rayon. Le moment de flexion conduit à une déformation polygonale de la jante, appelée couramment "saut", avec un voile local au niveau de chaque zone d'accrochage de rayon.

Les demandes de brevet EP 1316442 et FR 1019285, prévoyant un rayonnage appairé, illustrent ces deux phénomènes auxquels elles tentent d'apporter une solution. Au passage on peut souligner que le fait d'accrocher les rayons par paires au niveau de la jante, comme décrit dans le EP 1316442, atténue bien l'effet de voile local, mais accentue l'effet polygonal.

Pour résoudre ce problème le EP 1316442 propose de partir d'une jante prédéformée à l'opposé (cf. figure 5 de ce brevet), ce qui est délicat à mettre en oeuvre.

Enfin, on a remarqué que la durée de vie d'une roue, c'est-à-dire de chacun de ses composants est sensiblement inversement proportionnelle à la tension des rayons. Au cours de la rotation de la roue chaque rayon est soumis à un cycle de chargement et déchargement et chaque rayon soumet localement la jante à un tel cycle de chargement et déchargement. Ces cycles répétés finissent par endommager le rayon, le moyeu ou la jante et ceci d'autant plus rapidement que la tension dans le rayon est élevée. De ce fait les roues actuelles à rayons tendus n'ont pas une durée de vie optimale. Compte-tenu de cet état de la technique, il existe un besoin pour une construction de roue conciliant légèreté, rigidité, résistance, et durée de vie optimale.

Le document US 2,994,560 est considéré comme l'état de la technique le plus proche.

Il existe également un besoin pour une roue dont les caractéristiques géométriques (voile, saut, développé) restent les plus stables possibles.

Ces buts et d'autres buts qui apparaîtront au cours de la description qui va suivre sont résolus par le nouveau concept de roue selon l'invention.

Notamment ce ou ces buts sont atteints dans la roue selon l'invention comme revendiquée dans la revendication 1. Par ailleurs la roue comporte un nombre de rayons supérieur aux roues à bâtons et comporte par exemple un nombre de rayons supérieurs à dix. Une telle construction a l'avantage de réduire, à l'état libre, toutes les contraintes à l'intérieur des rayons de la jante, à zéro. De ce fait les rayons sont prévus pour pouvoir résister à un effort de compression important, sans flamber, de façon à pouvoir résister aux efforts s'exerçant dans la roue en cours d'utilisation.

Une telle construction va à l'encontre des idées reçues concernant la construction de roues qui supposent que, à l'état libre, c'est-à-dire non chargé, de la roue, soit les rayons sont précontraints par la jante et ont alors de fortes sections pour pouvoir résister aux efforts de compression, soit les rayons sont prétendus et précontraignent alors la jante.

L'idée à la base de l'invention, de supprimer toute (ou quasiment toute) contrainte à l'intérieur de la roue (jante, rayons) à l'état libre, permet d'augmenter sensiblement la résistance globale d'une telle roue. Par ailleurs une telle roue présente les avantages suivants :

- la roue n'a plus du tout de tension, la rupture d'un rayon n'induit plus de voile comme dans une roue à rayons tendus ou comprimés,
- la roue n'a plus de contraintes résiduelles, elle est donc moins sollicitée et peut donc être allégée,
- les rayons et leurs extrémités sont beaucoup moins sollicités en traction et sont donc plus résistants de même que la jante et le moyeu,
- la roue est plus résistante à la fatigue (moins de contrainte),
- la roue ne présente plus du tout d'effet polygonal, ni de voil induit,
- si un rayon est cassé, on peut le remplacer en enlevant l'ancien et en fixant un rayon directement sur la roue sans montage particulier.

Par ailleurs, contrairement à une roue à quelques bâtons, dont le nombre est inférieur à six en principe, la rigidité latérale est quasiment constante, ce qui n'est pas vrai sur les roues à trois bâtons par exemple, et la rigidité frontale n'est pas trop élevée et quasi-constante, ce qui procure au cycliste une roue confortable par rapport aux chocs frontaux dus aux irrégularités de la route.

Selon un mode de réalisation, chaque rayon comporte un corps ayant un diamètre extérieur supérieur à 4,8 mm et un diamètre intérieur inférieur à 15 mm. Par rapport aux rayons connus traditionnels, les rayons sont donc des rayons tubulaires, dont le diamètre extérieur est plus important, ce qui permet d'augmenter la résistance (au flambage) à la compression du rayon sans en augmenter le poids. On peut également avoir des rayons de section non tubulaire et par exemple ayant une section transversale en forme de I.

On peut également prévoir des rayons de section non constante en direction longitudinale et le rayon peut avoir une section de forme variable selon cette direction longitudinale, et par exemple une section plus importante dans la zone médiane de façon à mieux résister au flambage.

De toute façon l'invention sera mieux comprise et d'autres caractéristiques de celle-ci seront mises en évidence à l'aide de la description qui suit en référence au dessin schématique annexé, représentant à titre d'exemples non limitatifs, quelques modes de réalisation et dans lequel :

- la figure 1 est une vue en perspective d'une roue incorporant la construction selon l'invention,
- la figure 2 est à échelle agrandie une vue de détail du montage des rayons au niveau du moyeu,
- la figure 3 est une vue en coupe longitudinale du moyeu de la figure 2, sans les rayons,
- les figures 4 et 5 sont des vues en plan de la roue illustrant les différentes étapes de montage des rayons,
- la figure 6 est, à échelle agrandie, une vue de détail de la figure 5 montrant le montage des rayons au niveau du moyeu,
- la figure 7 est une vue en coupe selon VII-VII de la figure 5 montrant l'accrochage des rayons au niveau de la jante,
- la figure 8 est une vue en coupe selon VIII-VIII de la figure 6,
- la figure 9 est une vue similaire à la figure 7 selon un autre mode de réalisation,
- la figure 10 est une vue montrant un exemple de ligature de deux rayons,
- la figure 11 est une vue en perspective partielle d'une roue selon un autre mode de réalisation,
- la figure 12 est une vue en coupe selon XIII-XII de la figure 11,
- la figure 13 est une vue en coupe selon XIII-XIII de la figure 11.

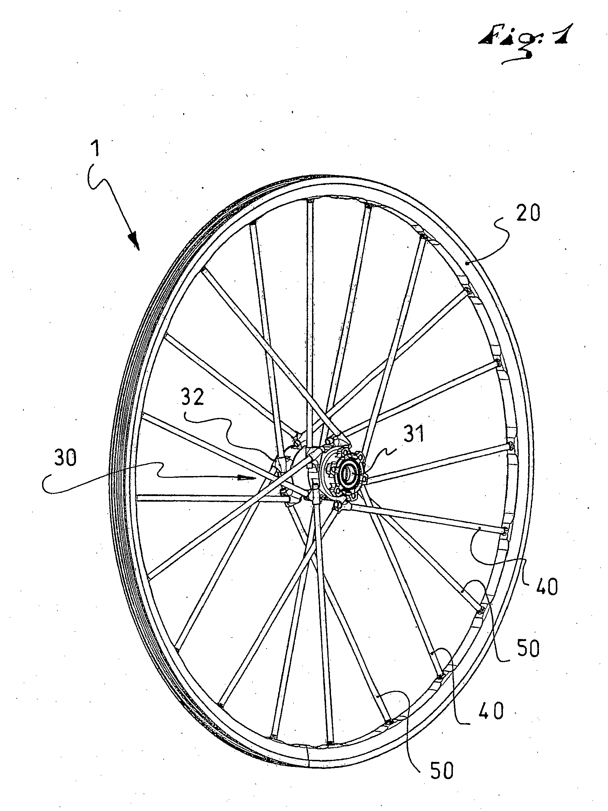

La roue 1 selon l'invention représentée à la figure 1, comprend de façon classique une jante périphérique 20, un moyeu central 30 et des rayons 40, 50 de liaison entre la jante 20 et le moyeu 30. Les rayons 40, 50 sont répartis en deux nappes, chaque nappe de rayons respectivement 40, 50 étant accrochée à une extrémité 31, 32 du moyeu 30 et s'étendant de ladite extrémité, respectivement 31, 32, du moyeu vers la jante 20. Les rayons respectivement 40, 50 sont accrochés alternativement sur la jante et répartis régulièrement selon la périphérie de celle-ci. Ils peuvent également être répartis sur les différentes nappes selon des groupes déterminés, de façon connue en soi sur les roues à rayons tendus, comme décrit, par exemple, dans le brevet US 6,145,938.

On remarquera que chaque nappe de rayons 40, 50 comporte dix de ces rayons, soit vingt au total, ce qui est un nombre très supérieur au nombre de bâtons dans une roue dite à bâtons, ayant un maximum de six bâtons et un nombre inférieur au nombre usuel de rayons dans une roue à rayons tendus ayant un nombre de rayons de l'ordre de 12 à 40. Ce nombre de rayons peut être descendu à 10 sur l'ensemble des deux nappes.

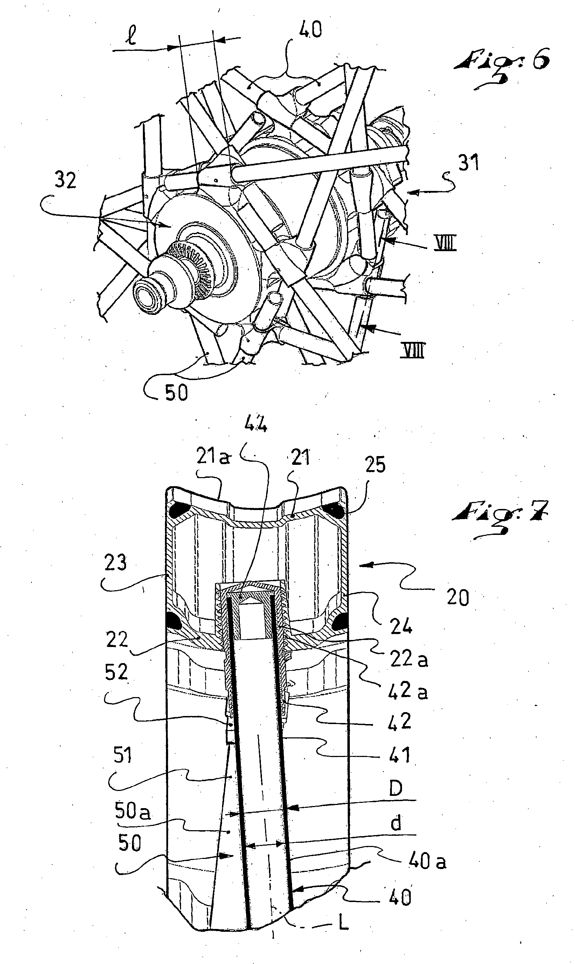

La jante 20 est de tout type approprié, et présente par exemple, comme montré à la figure 7, une structure métallique creuse en caisson avec un pont supérieur 21, présentant un canal 21a de réception d'un boyau à sa périphérie, un pont inférieur 22 présentant des cheminées taraudées 22a d'accrochage des rayons et deux parois latérales 23, 24 reliant les deux ponts. Les cheminées taraudées 22a peuvent être obtenues par fluoperçage comme décrit dans le brevet FR 2 750 913. Dans l'exemple représenté, le caisson est par ailleurs renforcé dans chaque coin par un cerclage en carbone 25 tel que décrit dans la demande de brevet FR 2 881 682.

Bien entendu toute autre forme de jante peut convenir, la jante peut notamment avoir un seul pont, un canal de réception 21a de forme différente et pouvant notamment recevoir un pneu.

Selon l'invention, les rayons 40, 50 sont, à l'état libre (i.e. sans charge de la roue), montés sans tension, ni compression entre la jante 20 et le moyeu 30 et chaque rayon peut supporter une charge de compression d'au moins 60 daN.

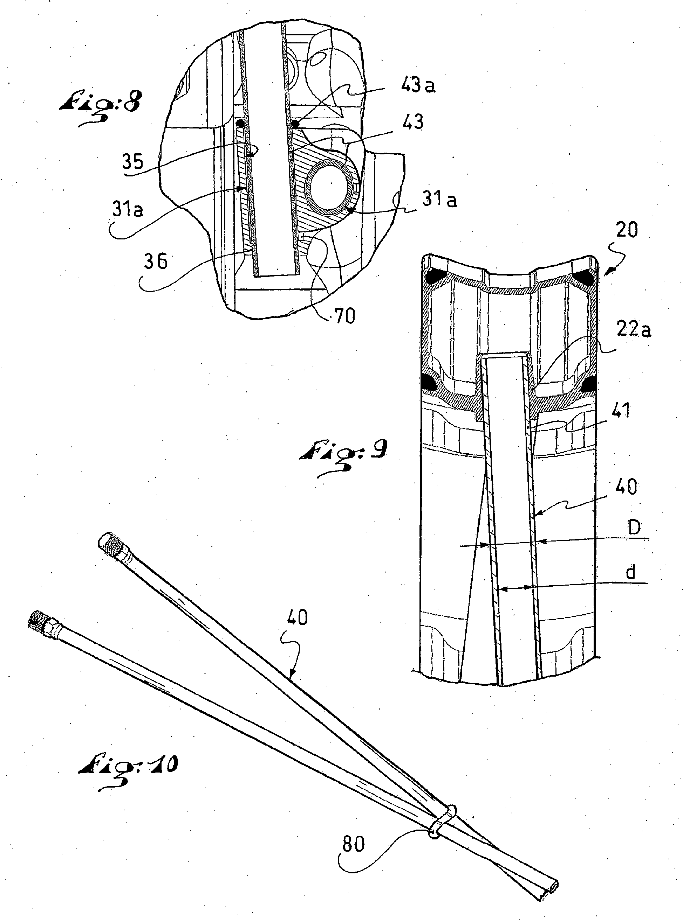

Pour obtenir une telle caractéristique, chaque rayon 40, 50 comporte comme montré sur les figures 7 et 8 un corps longiligne respectivement 40a, 50a définissant pour chaque rayon une direction longitudinale L et comportant deux extrémités d'accrochage respectivement 41, 51 et 43, 53. Par ailleurs le corps 40a, 50a de chaque rayon est un corps tubulaire, ayant par exemple une section circulaire ou elliptique, en un matériau ayant de hautes caractéristiques de résistance et notamment en carbone pultrudé.

Selon un exemple de réalisation, à partir de fibres de carbone pultrudées courantes HR (haute résistance) et d'une matrice en résine époxy ayant un module global de 115 Gpa, chaque rayon 40, 50 a un diamètre extérieur D supérieur à 4,8 mm, (et par exemple 5,5 mm et un diamètre intérieur d, inférieur à 15 mm (et par exemple 4,1 mm) avec une épaisseur de paroi de 0,7 mm, cette épaisseur de paroi pouvant être diminuée en cas de rayon creux (tubulaire) rempli par exemple de mousse. Des valeurs différentes peuvent également être obtenues en fonction des matériaux et par exemple si on utilise des fibres carbones HM (haut module) ayant un module supérieur à 200 GPa. En pratique les rayons adaptés à un tel type de roue seront choisis de façon que leurs caractéristiques EI soient supérieures à $10^6$ Nmm², pour un rayon de longueur normale (ce qui équivaudrait en fait à la valeur EI d'un rayon en acier de 3,2 mm de diamètre et donc beaucoup trop lourd pour une utilisation dans une roue, de tels rayons aciers ayant généralement un diamètre de 2 mm).

De telles dimensions ont été obtenues par le calcul et vérifiées par des essais pratiques, de façon à concilier deux exigences contradictoires qui sont celles d'une part d'avoir un moment quadratique de flexion I des rayons le plus grand possible, pour résister aux efforts de compression élevés s'exerçant alternativement sur chaque rayon, en cours d'utilisation de la roue, du fait que ces rayons ne sont pas initialement prétendus (la tension s'opposant à la charge de compression), et limiter au maximum le risque de flambage et, d'autre part, de réduire le plus possible la masse des rayons de façon à ne pas augmenter, voir réduire la masse de la roue.

En effet, la masse M d'un rayon est donnée par la formule

$$M = L\rho S = L.\rho.\pi. (D^2 - d^2)/4$$

L est la longueur du rayon
$\rho$ est la densité du matériau (g/mm3)
D est le diamètre extérieur (mm)
d est le diamètre intérieur (mm)
S est la section du rayon

Par ailleurs, l'effort de compression maxi (flambage) est donné par la relation suivante

$$F = \pi^2 EI/(KL)^2 = \pi^3 (D^4 - d^4) E/[64(KL)^2]$$

Avec K coefficient fonction des conditions d'encastrement
K= 0,5 encastré / encastré
K=1 rotulé / rotulé
K= 2 pour encastré / libre
K= 4 pour libre / libre
E module d'Young du matériau en MPa
I moment quadratique (mm4)= $\pi (D^4 - d^4)/64$ pour une section tubulaire
L longueur de la poutre (mm) (i.e. rayon) entre appuis

En combinant ces deux formules on a observé qu'à section constante, l'augmentation du diamètre extérieur D permet de réduire l'épaisseur du tube, mais permet également d'augmenter très rapidement la force de flambage admissible. Ainsi si l'on compare un rayon tubulaire avec D= 4 mm, d= 2,65 mm, en fibre de carbone pultrudé ayant un module de 115 GPa, il supporte une force de compression de 55 daN, alors qu'un rayon de diamètre D= 6 mm, d= 5,2 mm en matériau identique, supporte une charge de flambage de 152 daN, soit presque trois fois plus, alors qu'il pèse la même masse. Un tel rayon est suffisant pour construire une roue de vélo à dix huit rayons non tendus dans des conditions normales d'utilisation, l'effort maxi sur chaque rayon étant alors inférieur à 140 daN. On notera qu'un certain flambage de rayons peut être admissible dans certaines conditions tant qu'on évite tout risque de rupture des rayons. On notera également l'importance du produit EI pour la résistance à l'effort de compression.

Afin de garantir le montage sans charge, i.e. sans tension, ni compression de chaque rayon 40, 50, il est prévu par ailleurs que la roue comporte un dispositif de liaison sans jeu, ou liaison bilatérale, d'au moins une extrémité de chaque rayon (40, 50) à la jante ou au moyeu.

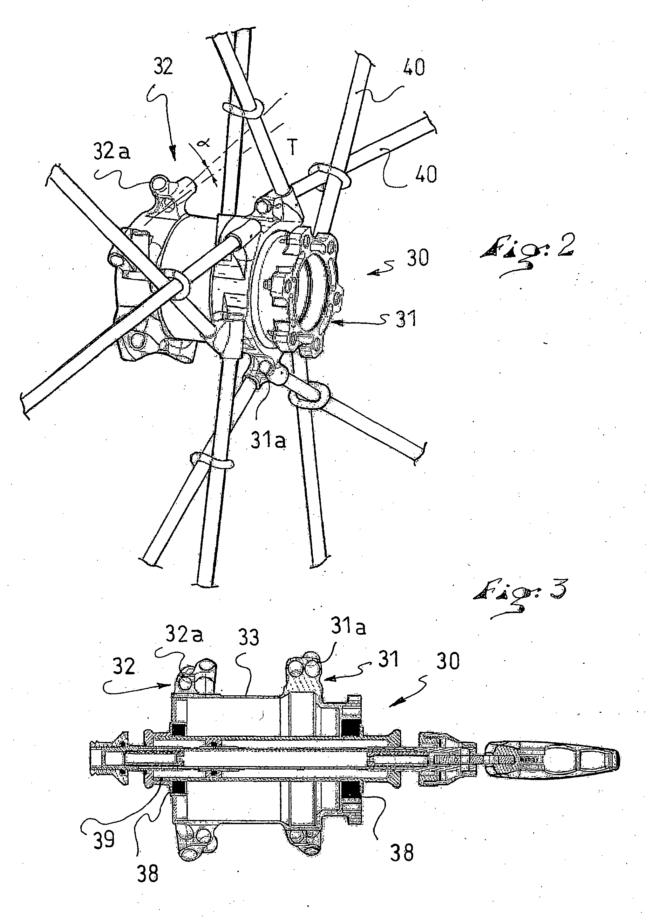

Ce dispositif de liaison et le montage des rayons vont être expliqués dans ce qui suit en référence aux figures 2 à 8.

Tout d'abord, comme le montrent particulièrement les figures 2 et 3, le moyeu 30 comporte un corps tubulaire 33 monté rotatif au moyen de roulements 38 sur un arbre 39, destiné à recevoir l'axe de rotation de la roue, et deux extrémités 31, 32 pour l'accrochage des rayons. Chaque extrémité 31, 32 a généralement la forme d'un disque ou collerette s'étendant radialement à partir du corps tubulaire 33.

Sur chacune de ces collerettes 31, 32 sont réalisés des logements respectivement 31a, 32a de forme générale cylindrique et s'étendant selon une direction sensiblement tangente T, au moyeu au niveau de ladite extrémité ou collerette, respectivement 31, 32. Ces logements 31a, 32a ont un diamètre intérieur correspondant sensiblement au diamètre extérieur D des rayons 40, 50 et sont destinés à recevoir ces derniers. Par ailleurs chaque logement 31a, 32a, a une longueur 1 d'environ 10 à 15 mm de façon à faciliter le montage et par la suite l'accrochage des rayons 40, 50.

Comme le montrent particulièrement les figures 2 et 8, les logements 31 a, 32a sont appairés et orientés selon des directions opposées pour le montage appairé de deux rayons adjacents au niveau de chaque extrémité 31, 32 du moyeu. Dans l'exemple représenté chaque extrémité 31, 32 comporte cinq paires de logement 31 a, 32a, répartis régulièrement le long de la périphérie du moyeu.

Comme le montre la figure 7, chaque rayon 40, 50 est muni, à son extrémité 41, 51 destinée à être fixée sur la jante 20, d'un embout respectivement 42, 52, muni d'un filetage extérieur respectivement 42a, 52a, et fixé par collage à ladite extrémité 41, 51 du rayon, celle-ci étant fermée à l'aide d'un bouchon 44, 54 de façon à éviter la pénétration de colle à l'intérieur du tube constituant ledit rayon lors de l'opération de montage sur le rayon. Chaque embout fileté 42, 52 est destiné à coopérer avec le taraudage associé d'une cheminée 22a de la jante pour la fixation par vissage de l'embout 42, 52 de ladite extrémité du rayon à la jante. L'autre extrémité 45, 55 de chaque rayon est libre (cf. figure 8).

Le montage sans jeu de chaque rayon 40, 50 s'obtient par collage d'une part de l'extrémité 43, 53 de chaque rayon au niveau du moyeu et vissage de son autre extrémité à la jante à l'aide de l'embout fileté 42, 52.

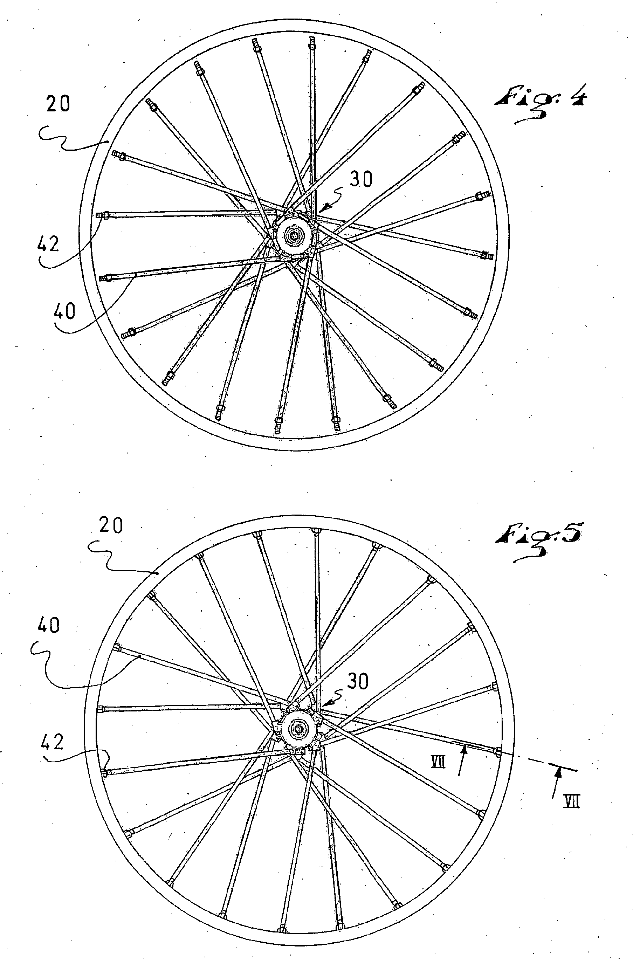

Ce montage est réalisé comme indiqué plus particulièrement sur les figures 4 et 5.

Tout d'abord les rayons 40, 50 sont préparés en coupant les tubes en fibre de carbone pultrudé dont ils sont formés, à la longueur souhaitée et en assemblant les embouts 42, 52 par collage comme indiqué précédemment.

On notera que ce collage est effectué après dégraissage préalable des surfaces pour un collage optimum. Ce collage pourra également être amélioré en prévoyant un état de surface approprié (par exemple rugosité, rainures) à l'intérieur de chaque embout 42, 52, afin d'améliorer la retenue de la colle.

L'extrémité 43, 53 de chaque rayon est ensuite introduite dans un logement associé respectivement 31a, 32a du moyeu en plaçant un joint d'étanchéité par exemple torique 43a, 53a, sur le rayon au niveau de la sortie du logement associé 31a, 32a (cf. figure 8). Les rayons 40, 50 d'une même nappe peuvent être assemblés par paires au moyen d'une ligature souple 80 (par exemple un joint d'étanchéité torique ou bague en matériau synthétique tel que Delrin, Polyamide ou Acétate) de façon à créer un noeud et repousser les limites au flambage de chaque rayon en compression. Les rayons peuvent être préparés par paires avec leur bague de ligature 80 avant montage, comme montré à la figure 10, afin de faciliter ledit montage.

On place ensuite la jante 20 autour du sous-ensemble moyeu 30, rayons 40, 50, comme montré à la figure 4, ces rayons étant rétractés à l'intérieur de leurs logements respectifs 31a, 32a de façon à permettre le positionnement correct de la jante autour dudit sous-ensemble, puis l'introduction et le vissage de chaque embout 42, 52 dans une cheminée 22a de la jante. Chaque logement 31a, 32a constitue donc un moyen de rétractation des rayons avant montage final ainsi que de guidage et de coulissement desdits rayons pendant le montage. L'ensemble est mis en place sur un montage approprié pour garantir une parfaite géométrie de la roue et notamment la perpendicularité de l'axe du moyeu par rapport au plan de la jante et le centrage, et le saut dudit moyeu par rapport à la jante.

On réalise ensuite le collage de l'autre extrémité 43, 53 de chaque rayon dans le logement 31a, 32a de moyeu associé, le joint 43a, 53a permettant de garantir l'étanchéité au moment du collage.

Comme le montre la figure 8, chaque logement 31a, 32a, présente un évidement cylindrique 35 de diamètre supérieur à celui du rayon et qui fermé à une extrémité par un épaulement 36 dont le diamètre est ajusté (jeu de l'ordre de 1/100° mm) à celui du rayon 40, 50 et qui débouche à l'autre extrémité au niveau du joint torique 43a, 53a. La colle est logée à l'intérieur de l'évidement avant le montage de chaque rayon 40, 50. Le faible jeu au niveau de l'épaulement 36 permet une certaine fuite d'air lors de l'injection de colle, mais permet également de retenir la colle. La colle est introduite, après positionnement des rayons et fixation de ceux-ci au niveau de la jante, à l'aide d'un trou 70, par exemple de forme conique, ménagé radialement dans chaque logement 31a, 32a, avant l'épaulement 36, par exemple à l'aide d'une aiguille.

Afin de garantir un bon collage il peut être souhaitable d'introduire la colle avant la fixation des rayons à la jante et de faire pivoter chaque rayon dans son logement de façon à bien mouiller l'interface de collage au niveau du moyeu et du rayon.

On laisse ensuite polymériser la colle à température ambiante, cette solution étant préférée dans le cas où la jante est en matériau différent (par exemple métallique) par rapport aux rayons, de façon à ne pas induire de dilatation thermique des matériaux, ou en étuve à une température de l'ordre de 80°C. Dès que la colle est polymérisée, on démonte la roue du montage. Dans le cas où on a laissé polymériser à température ambiante, on peut éventuellement réaliser une cuisson supplémentaire pour garantir un collage parfait.

La colle est par exemple une résine époxy bicomposant telle que connue sous la dénomination DP460.

Une autre alternative de montage peut être de visser au maximum les tubes des rayons 40, 50 avec les embouts 42, 52 préalablement collés dans la jante 20, de positionner ensuite le moyeu 30 au milieu et de dévisser les embouts 42, 52 pour faire pénétrer les extrémités 41, 51 des rayons dans les logements de collage 31a, 32a du moyeu, cette solution nécessite un filetage de chaque embout 42, 52 particulièrement longs car on le dévisse ensuite de la longueur du collage côté moyeu.

Du côté jante 20, la liaison filetée entre la jante et l'embout 42, 52 de chaque rayon doit être bilatérale en traction / compression, sans jeu. Pour ce faire, on peut déposer une enduction de polyamide, type "Nylock" pour masquer le jeu du filetage 42a, 52a, ou coller le filetage à l'aide d'une colle anaérobie ou epoxy, on peut aussi visser l'embout à fond dans les cheminées 22a contre un épaulement réalisé sur l'embout.

Une autre alternative peut être de coller le tube carbone du rayon directement dans la cheminée 22a de la jante, la longueur de collage se trouvera plus réduite mais on gagne le poids de l'insert.

Le rayon peut aussi être collé dans un insert rapporté brasé comme décrit dans le brevet EP 1 595 721.

Le rayon peut aussi être collé dans une jante composite.

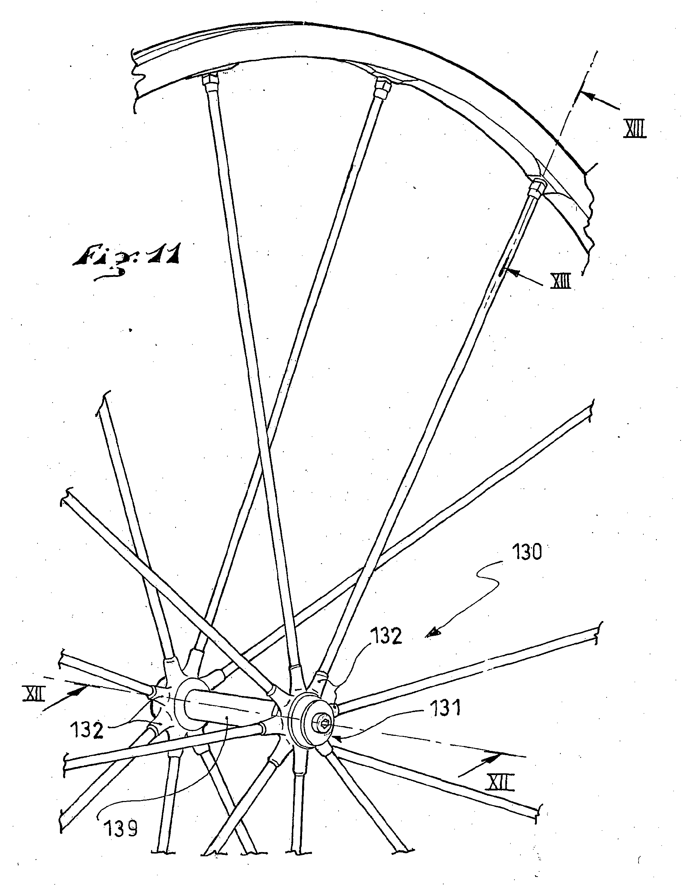

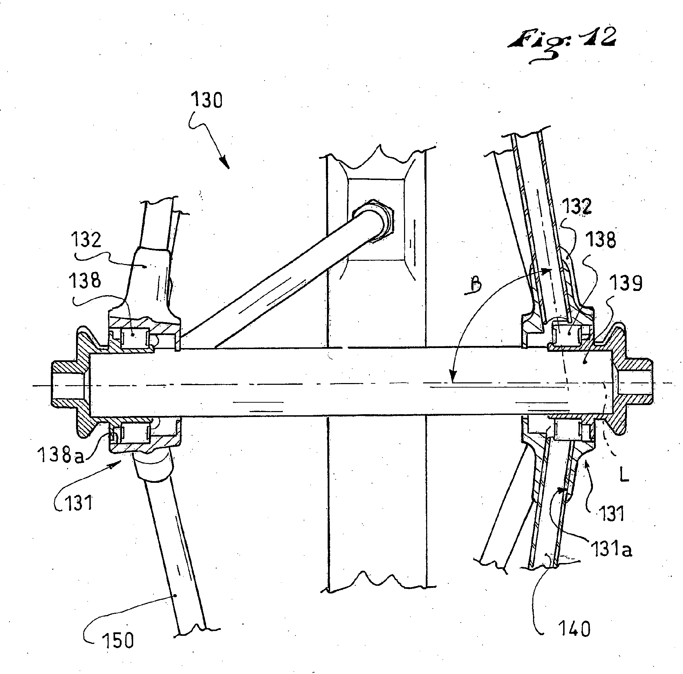

Les figures 11 à 13 illustrent un autre mode de réalisation dans lequel les éléments similaires sont désignés par les mêmes références augmentées de 100. Le moyeu 130 est réduit à sa plus simple expression et comporte seulement deux flasques 131 montés rotatifs sur un arbre 139 du moyeu au moyen de roulements 138. Les flasques 131 sont en l'occurrence identiques, et comportent des cheminées sensiblement radiales 132 définissant des logements cylindriques 132a pour chaque rayon 140, 150, chaque cheminée 132 fait un angle β de l'ordre de 82,5° par rapport à l'axe longitudinal L du moyeu. En d'autres termes, les flasques 131, du moyeu ne sont pas reliés l'un à l'autre par un corps à contrario des moyeux traditionnels ou de celui du mode de réalisation précédent.

Dans ce mode de réalisation comme dans le mode de réalisation précédent, les rayons 140, 150 sont fixés par collage à l'intérieur des cheminées 132 des flasques 131 après positionnement relatif des rayons / jante / moyeu selon le processus décrit précédemment. On notera que les rayons 140, 150 sont montés avant mise en place des roulements 138, de façon à pouvoir coulisser dans le logement 138a de ces derniers lors du montage.

Une telle construction de moyeu sans corps entre les flasques 131 est rendue possible du fait de l'annulation de toute tension dans les rayons 140, 150 à l'état libre (non chargé) de la roue.

Dans une construction de roue traditionnelle à rayons sous tension, une telle construction de moyeu telle que connue par exemple par le brevet US 5,647,643 ne serait pas viable. En effet sur ce type de moyeu, la tension des rayons a pour effet d'induire un effort axial de l'ordre de 700 N entre les deux nappes opposées de rayons, cet effort se trouve repris axialement par les deux roulements, ce qui induit un couple de frottement non négligeable sur chaque roulement qui crée une perte de puissance nuisible à la performance du cycliste, de plus cet effort axial important endommage très rapidement ces roulements. L'annulation de la tension des rayons selon l'invention annule complètement cet effort axial et donc rend cette construction parfaitement fonctionnelle et possible.

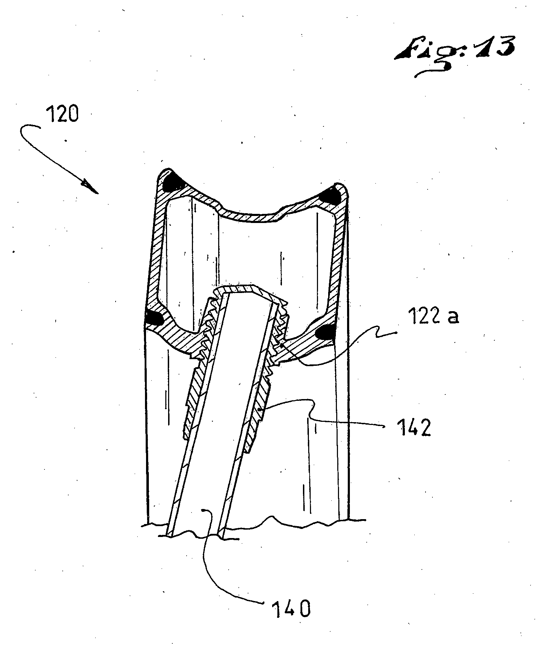

Dans cet exemple de réalisation, le montage des rayons côté jante peut être réalisé comme montré sur la figure 13, c'est-à-dire de la même façon que montré à la figure 7, la seule différence étant que les rayons 140, 150 sont munis d'un embout 142 mais sont dépourvus de bouchon. Bien entendu un bouchon peut également être prévu.

En variante on peut imaginer mettre la roue en très légère précontrainte axiale afin de précharger les roulements dans un sens et ainsi annuler leur jeu radial par une petite précontrainte axiale. Il est souhaitable, dans ce type de construction, que le centre de poussée (et sensiblement le centre du roulement) des roulements à billes 138 se situe au point de convergence des différents rayons 140, 150, en effet en négligeant l'effet de la flexion des rayons et en ne considérant que la composante axiale de traction ou compression), la résultante de la nappe de rayons passe toujours par les points de concours des rayons de la nappe, ainsi le roulement annulaire travaillera dans de bonnes conditions sans aucun moment de déversement ?

Bien entendu, la présente invention n'est pas limitée aux modes de réalisation décrits ci-avant à titre d'exemples non limitatifs et en englobe tous les modes de réalisation définis par les revendications.

C'est ainsi que les rayons peuvent avoir une section non nécessairement tubulaire (et par exemple en forme de I, et / ou évolutive (par exemple en forme de "tonneau" avec une zone médiane de section plus importante), ou que les rayons peuvent être en un matériau non composite et par exemple métallique. Par ailleurs on notera que la dilatation différentielle de la jante par rapport aux rayons (lié au changement des conditions par rapport au moment du collage), ou le gonflage du pneumatique ou d'autres facteurs (légère précontrainte de la jante dans son montage au collage), peuvent induire de légères contraintes de tensions / compression dans les rayons, sans que l'on sorte pour autant du cadre de l'invention, ces contraintes étant considérées comme mineures et les rayons étant alors toujours montés quasiment sans tension ni compression.

## Revendications

1. Roue à rayons pour cycle comprenant une jante (20, 120) périphérique, un moyeu central (30,130) et des rayons (40, 50, 140, 150) de liaison entre la jante et le moyeu, les dits rayons étant répartis sur deux nappes, **caractérisée en ce que** les rayons sont des rayons de liaison individuels; **en ce que**, à l'état libre les rayons (40, 50, 140, 150) sont montés sans tension, ni compression entre la jante et le moyeu; **en ce que** chaque rayon peut supporter une charge de compression d'au moins 60 daN sans flambage; et **en ce que** le produit E.I de chaque rayon est supérieur à $10^6$ $Nmm^2$.

2. Roue selon la revendication 1, **caractérisée en ce qu'**elle comporte un dispositif de liaison sans jeu, ou liaison bilatérale, d'au moins une extrémité (41, 51) de chaque rayon (40, 50) à la jante ou au moyeu.

3. Roue selon la revendication 2, **caractérisée en ce que** chaque dispositif de liaison (42, 52) sans jeu comporte un dispositif de neutralisation du jeu de liaison.

4. Roue selon l'une des revendications 2 à 3, **caracté-**

**risée en ce que** l'autre extrémité (43, 53) de chaque rayon est fixée par collage.

5. Roue selon la revendication 2 ou 3, **caractérisée en ce que** le jeu de liaison est neutralisé par collage.

6. Roue selon l'une des revendications 1 à 5, **caractérisée en ce qu'**elle comporte un nombre de rayons (40, 50) supérieur à dix.

7. Roue selon l'une des revendications 1 à 6, **caractérisée en ce que** chaque rayon comporte un corps (40a, 50a) ayant un diamètre extérieur supérieur à 4,8 mm et un diamètre intérieur d inférieur à 15 mm.

8. Roue selon l'une des revendications 1 à 7, **caractérisée en ce que** le corps (40a, 50a) de chaque rayon (40, 50) est tubulaire.

9. Roue selon l'une des revendications 1 à 8, **caractérisée en ce que** les rayons sont réalisés en fibres de carbone pultrudé.

10. Roue selon l'une des revendications 4 à 9, **caractérisée en ce qu'**elle comporte un moyeu (30, 130) comportant des moyens de rétractation (31a, 32a, 138a) des rayons avant montage final.

11. Roue selon la revendication 10, **caractérisée en ce que** le moyeu comporte des moyens de guidage et de coulissement (31a, 32a) de chaque rayon.

12. Roue selon l'une des revendications 1 à 11, **caractérisée en ce que** le moyeu (30) comporte deux extrémités (31, 32) et **en ce que** des logements (31a, 32a) de forme générale cylindrique sont réalisés sur chacune de ces extrémités (31, 32), lesdits logements (31a, 32a) étant destinés à recevoir les rayons.

13. Roue selon la revendication 12, **caractérisée en ce que** lesdits logements (31a, 32a) ont une longueur d'environ 10 à 15 mm.

14. Roue selon l'une des revendications 12 ou 13, **caractérisée en ce que** les logements (31a, 32a) s'étendent selon une direction T, tangente au moyeu (30) au niveau de ladite extrémité (31, 32).

## Patentansprüche

1. Speichenrad für ein Fahrrad umfassend eine periphere Felge (20, 120), eine zentrale Nabe (30, 130) und Verbindungsspeichen (40, 50, 140, 150) zwischen der Felge und der Nabe, wobei die Speichen auf zwei Lagen aufgeteilt sind, **dadurch gekennzeichnet, dass** die Speichen einzelne Verbindungsspeichen sind; in dem freien Zustand die Speichen (40, 50, 140, 150) ohne Spannung oder Druck zwischen der Felge und der Nabe montiert sind; jede Speiche eine Druckbelastung von mindestens 60 daN ohne Knicken ertragen kann; und dadurch, dass das E.I-Produkt jeder Speiche größer als $10^6$ Nmm$^2$ ist.

2. Rad nach Anspruch 1, **dadurch gekennzeichnet, dass** es eine Verbindungsvorrichtung ohne Spiel, oder eine bilaterale Verbindung, mindestens eines Endes (41, 51) jeder Speiche (40, 50) mit der Felge oder der Nabe umfasst.

3. Rad nach Anspruch 2, **dadurch gekennzeichnet, dass** jede Verbindungsvorrichtung (42, 52) ohne Spiel eine Vorrichtung zur Neutralisierung des Verbindungsspiels umfasst.

4. Rad nach einem der Ansprüche 2 oder 3, **dadurch gekennzeichnet, dass** das andere Ende (43, 53) jeder Speiche durch Kleben befestigt wird.

5. Rad nach Anspruch 2 oder 3, **dadurch gekennzeichnet, dass** das Verbindungsspiel durch Kleben neutralisiert wird.

6. Rad nach einem der Ansprüche 1 bis 5, **dadurch gekennzeichnet, dass** es eine Anzahl an Speichen (40, 50) umfasst, die größer als zehn ist.

7. Rad nach einem der Ansprüche 1 bis 6, **dadurch gekennzeichnet, dass** jede Speiche einen Körper (40a, 50a) mit einem Außendurchmesser, der größer als 4,8 mm ist, und einem Innendurchmesser, der kleiner als 15 mm ist, umfasst.

8. Rad nach einem der Ansprüche 1 bis 7, **dadurch gekennzeichnet, dass** der Körper (40a, 50a) jeder Speiche (40, 50) röhrenförmig ist.

9. Rad nach einem der Ansprüche 1 bis 8, **dadurch gekennzeichnet, dass** die Speichen aus pultrudierten Karbonfasern hergestellt sind.

10. Rad nach einem der Ansprüche 4 bis 9, **dadurch gekennzeichnet, dass** es eine Nabe (30, 130) umfasst, die Mittel (31a, 32a, 138a) zum Zurückziehen der Speichen vor der endgültigen Montage umfasst.

11. Rad nach Anspruch 10, **dadurch gekennzeichnet, dass** die Nabe Mittel (31a, 32a) zum Führen und Gleiten jeder Speiche umfasst.

12. Rad nach einem der Ansprüche 1 bis 11, **dadurch gekennzeichnet, dass** die Nabe (30) zwei Enden (31, 32) umfasst, und dadurch, dass Lager (31a, 32a) allgemeiner zylindrischer Form an jedem dieser Enden (31, 32) realisiert sind, wobei die Lager (31a, 32a) zum Aufnehmen der Speichen bestimmt sind.

13. Rad nach Anspruch 12, **dadurch gekennzeichnet, dass** die Lager (31a, 32a) eine Länge von ca. 10 bis 15 mm aufweisen.

14. Rad nach einem der Ansprüche 12 oder 13, **dadurch gekennzeichnet, dass** die Lager (31a, 32a) sich entlang einer Richtung T erstrecken, die zu der Nabe (30) am Ende (31, 32) tangential ist.

**Claims**

1. Spoke wheel for a cycle comprising a peripheral rim (20, 120), a central hub (30, 30) and connection spokes (40, 50, 140, 150) between the rim and the hub, said spokes being spread onto two sets, **characterized in that** the spokes are individual connection spokes, in a free state, the spokes (40, 50, 140, 150) are mounted without tension and compression between the rim and the hub, each spoke can sustain a compression load of at least 60 daN without bending, and **in that** the E.I product of each spoke is larger than $10^6$ Nmm$^2$.

2. Wheel according to claim 1, **characterized in that** it comprises a device for connecting without any play, or a bilateral connection, of at least one end (41, 51) of each spoke (40, 50) to the rim or the hub.

3. Wheel according to claim 2, **characterized in that** each device (42, 52) for connecting without any play comprises a device for neutralizing the connection play.

4. Wheel according to one of claims 2 to 3, **characterized in that** the other end (43, 53) of each wheel is fastened by gluing.

5. Wheel according to claim 2 or 3, **characterized in that** the connection play is neutralized by gluing.

6. Wheel according to one of claims 1 to 5, **characterized in that** it comprises a number of spokes (40, 50) that is larger than ten.

7. Wheel according to one of claims 1 to 6, **characterized in that** each spoke comprises a body (40a, 50a) with an outer diameter that is larger than 4.8 mm and an inner diameter that is smaller than 15 mm.

8. Wheel according to one of claims 1 to 7, **characterized in that** the body (40a, 50a) of each spoke (40, 50) is tubular.

9. Wheel according to one of claims 1 to 8, **character-**

**ized in that** the spokes are realized in pultruded carbon fibers.

10. Wheel according to one of claims 4 to 9, **characterized in that** it comprises a hub (30, 30) comprising means (31a, 32a, 138a) for retracting the spokes before the final assembly.

11. Wheel according to claim 10, **characterized in that** the hub comprises means (31a, 32a) for guiding and gliding each spoke.

12. Wheel according to one of claims 1 to 11, **characterized in that** the hub (30) comprises two ends (31, 32) and **in that** housings (31a, 32a) having a general cylindrical shape are realized at each one of these ends (31, 32), said housings (31a, 32a) being adapted to accommodate the spokes.

13. Wheel according to claim 12, **characterized in that** the housings (31a, 32a) have a length of about 10 to 15 mm.

14. Wheel according to one of claims 12 or 13, **characterized in that** the housings (31a, 32a) extend along a direction T that is tangential to the hub (30) at the end (31, 32).

*Fig. 1*

Fig. 2

Fig. 3

*Fig. 4*

20

42

40

30

*Fig. 5*

20

40

42

30

VII

VII

*Fig. 6*

*Fig. 7*

*Fig:8*

43 a

43

35

31 a

31 a

36

70

*Fig:9*

20

22 a

41

40

D

d

40

*Fig:10*

80

*Fig: 11*

*Fig. 12*

*Fig:13*

120

122 a

142

140

**EP 2 021 189 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CH 91759
- WO 2004033231 A
- FR 2701899
- EP 1016552 A
- WO 2004108515 A
- EP 1316442 A
- FR 1019285
- US 2994560 A
- US 6145938 A
- FR 2750913
- FR 2881682
- EP 1595721 A
- US 5647643 A